# EUROPEAN PATENT APPLICATION

(11) **EP 4 604 298 A1**
(43) Date of publication of application: **20.08.2025**
(21) Application number: 24854425.6
(22) Date of filing: 12.08.2024
(51) Int. Cl.: H01M 50/383, H01M 50/271

(54) **BATTERY PACK**

(30) Priority: 16.08.2023 KR 20230107092
(71) Applicant: LG Energy Solution, Ltd., Seoul 07335 (KR)
(72) Inventor: SON, Hong Se, Daejeon 34122 (KR); LEE, Chan Yeol, Daejeon 34122 (KR); JO, Yeong Shin, Daejeon 34122 (KR); YOON, Young Il, Daejeon 34122 (KR)
(74) Representative: Plasseraud IP
(86) International application number: PCT/KR2024/011947
(87) International publication number: WO 2025/037874

(57) **Abstract**

Disclosed herein relates to a battery pack in which a cell assembly is accommodated, including: a pack case in which a cell assembly is seated; and an upper case coupled to the pack case to cover an upper part of a cell assembly seated inside the pack case, wherein the upper case includes a protruding part at a lower end that presses against the upper part of a cell assembly seated in the pack case.

## Description

### [Technical Field]

The present disclosure relates to a battery pack in which a cell assembly is accommodated.

This application claims the benefit of priority from Korean Patent Application No. 10-2023-0107092, filed on Aug. 16, 2023, the disclosure of which is incorporated herein by reference.

### [Background]

Generally, a cell includes an electrode assembly stacked with alternating layers of electrodes and separators, an electrode lead coupled to an electrode of the electrode assembly, a case from which the electrode lead is drawn out to the outside and enclosing the electrode assembly, and an electrolyte filled inside the case with the electrode assembly.

The cells may be broadly categorized into cylindrical cells, pouch-type cells, and prismatic cells according to the shape of the case.

While cells are sometimes used alone, they are more commonly configured as a plurality of cells electrically connected in series and/or parallel to each other. In particular, a plurality of cells are electrically connected to each other to form a cell stack. Further, the cell stack may be stored within a module frame to form a single cell assembly.

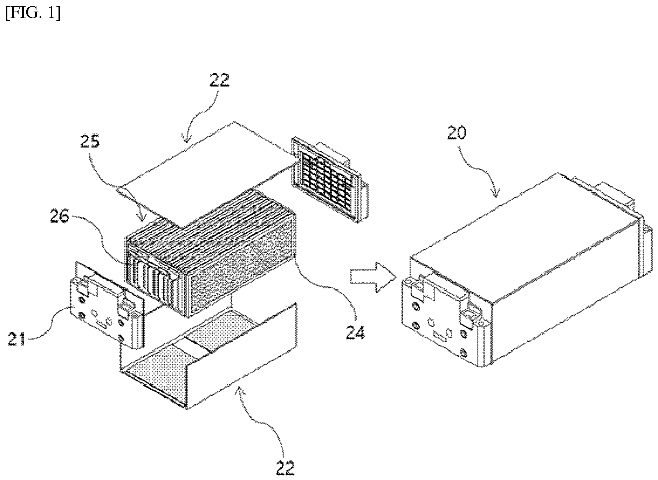

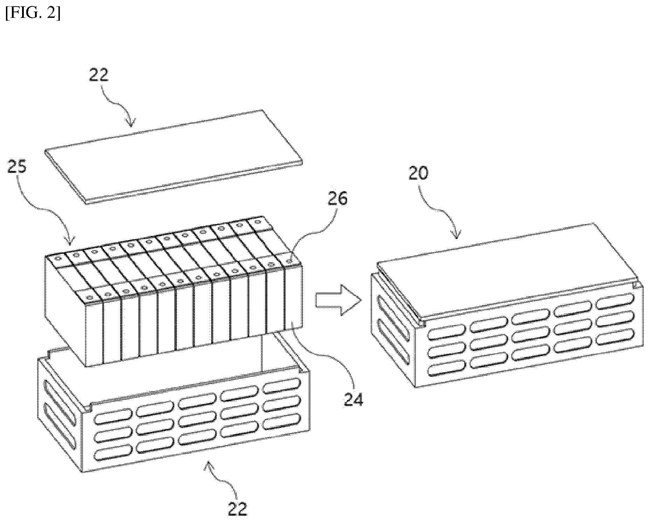

FIG. 1 illustrates a cell assembly 20 accommodating a pouch-type cell 24, and FIG. 2 illustrates a cell assembly 20 accommodating a prismatic cell 24.

The pouch-type cells 24 are disposed such that the electrode leads 26 of each cell 24 are located on the side parts, as shown in FIG. 1. Thus, the cell assembly 20 may have terminals formed on the side parts corresponding to the electrode leads 26 of the accommodated cells 24.

The cell assembly 20 accommodating the pouch-type cells 24 may have end plates 21 coupled to the front and rear surfaces of the cell stack 25 to protect the terminals. Thus, the cell assembly 20 accommodating the pouch-type cells 24 may be provided with external terminals on the end plates 21 that are electrically connected to the cell stack 25.

The prismatic cells 24 are disposed such that the electrode leads 26 of each cell 24 face toward the upper part, as shown in FIG. 2. The cell assembly 20 may therefore have terminals formed on the upper part corresponding to the electrode leads 26 of the accommodated cells 24. Thus, the cell assembly 20 in which the prismatic cells 24 are accommodated may be provided on the module frame 22 with external terminals electrically connected to the cell stack 25 located on the upper part of the cell stack 25.

The cell assembly 20 accommodating the prismatic cells 24 is not subject to the configuration of the end plates 21 added due to the electrode leads 26 provided on the side part, as shown in FIG. 2.

The cell assembly 20, as shown in FIGS. 1 and 2, has slight variations based on the shape of the cells 24 accommodated therein, but is otherwise identical in that the cell stack 25 inside is enclosed and protected by the module frame 22.

A cell assembly 20 utilized in products requiring high power, such as electric vehicles, may be two or more electrically connected in series and/or parallel to each other to form a higher level device, such as a battery pack.

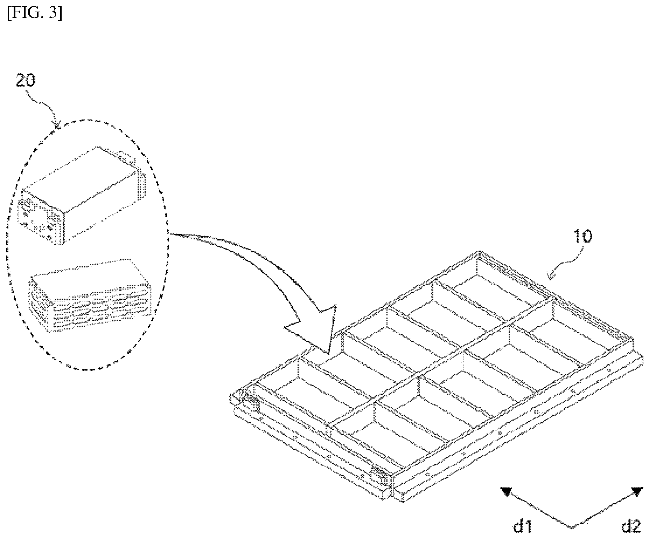

FIG. 3 illustrates a conventional battery pack and a cell assembly 20 accommodated therein. The battery pack may include a pack case 10 into which the cell assemblies 20 are directly inserted and accommodated, and an upper case coupled to the pack case 10 such that the space inside the pack case 10 is sealed from the outside. Each of the cell assemblies 20 is stored in a compartmentalized space within the pack case 10 as shown in FIG. 3.

Meanwhile, in a cell assembly 20 that includes a plurality of cells 24 that are closely packed together in a small space, some of the cells 24 may experience problems, such as short circuits, that cause the temperature of the cells 24 to continuously increase, resulting in a thermal runaway phenomenon where the temperature of the cells 24 exceeds a threshold temperature. High temperature gases and spark particles may be ejected from the thermal runaway cell 24 (By spark particles, it means, for example, active material or molten aluminum particles that have deintercalated from the electrodes inside the cell 24.). In addition, in some cases, some cells 24 may even burst into flames.

As described above, if gas is generated inside the cell assembly 20 enclosed by the module frame 22 and the end plate 21 or the like, there may be a risk that the cell assembly 20 may explode due to the gas pressure, and the explosion may cause flame and heat or the like to be transferred to other cell assemblies. The conventional cell assembly 20 may be formed with an opening hole 23 through which gas can be discharged to solve the above explosion problem.

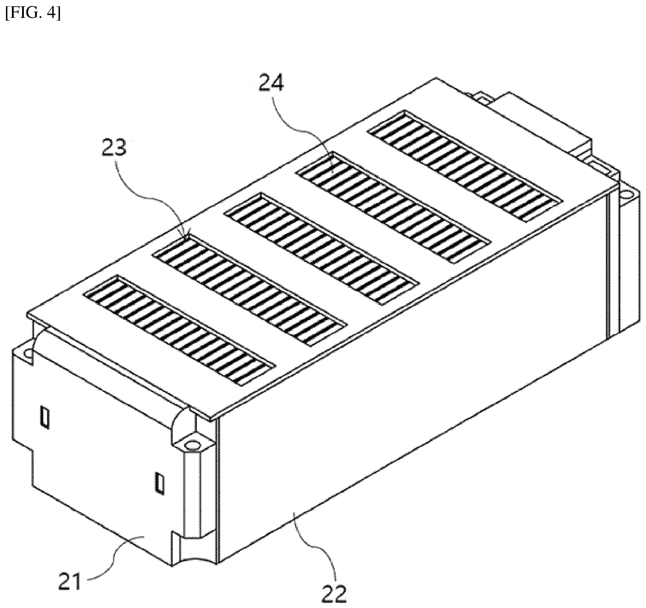

FIG. 4 illustrates a conventional cell assembly 20 with opening hole 23. The cell assembly 20 with the opening hole 23 can prevent internal pressure from being generated by rapidly discharging high temperature gases even if the cells 24 inside generate high temperature gases due to thermal runaway.

However, when an opening hole 23 is formed in the cell assembly 20 as described above, a problem has frequently occurred that spark particles and flames generated in the cell 24 are transferred to other cell assemblies 20 through the opening hole 23.

### [Summary]

### [Technical Problem]

Accordingly, the present disclosure aims to solve the above-mentioned problems and provides a battery pack having a structure capable of effectively discharging internally generated gases to the outside in a thermal runaway situation.

It is also an object of the present disclosure to provide a battery pack having a structure capable of delaying the progression of thermal runaway to other cell assemblies, even if thermal runaway occurs in any one of the cell assemblies accommodated therein.

Other objects and advantages of the present disclosure will be understood from the following description, and will become more apparent from the embodiments of the present disclosure. It will also be readily apparent that the objects and advantages of the present disclosure may be realized by the means and combinations thereof disclosed in the patent claims.

### [Technical Solution]

The present disclosure provides a battery pack in which a cell assembly is accommodated.

The battery pack includes: a pack case in which a cell assembly is seated; and an upper case coupled to the pack case to cover an upper part of a cell assembly seated inside the pack case, wherein the upper case includes a protruding part at a lower end that presses against the upper part of a cell assembly seated in the pack case.

The cell assembly may include: a cell stack including a plurality of cells; and a module frame enclosing at least one side of the cell stack.

The module frame may include an opening hole open to expose a cell stack therein to the outside.

The opening holes may be formed in any one of a circular and a polygonal shape.

The opening holes may extend along at least one of a longitudinal direction and a width direction of the cell assembly.

The cell assembly may further include a protective sheet that attaches to a surface of the module frame to cover the opening hole.

The protruding part of the upper case may be formed in a position where the opening holes of the cell assembly is not provided.

The opening holes may be formed on a module frame located on the upper part of the cell assembly.

The protective sheet may be a porous structure comprising a plurality of pores that selectively allow gas to pass through.

The protective sheet may be a structure that is not formed with pores to prevent the passage of gases.

The protective sheet may have electrical insulating properties.

The protective sheet may have heat and flame resistance.

The protruding part may be in the form of a column with a flat end.

The protruding part may be in the form of a downward convex projection.

The protruding part may extend along at least one of a longitudinal direction and a width direction of the upper case.

### [Advantageous Effects]

According to the present disclosure, in a battery pack accommodating a plurality of cell assemblies, even if thermal runaway occurs in one of the cell assemblies, the heat transfer to other neighboring cell assemblies can be maximally suppressed to improve safety against explosion.

### [Brief Description of the Drawings]

FIG. 1 illustrates a conventional cell assembly including a pouch-type cell.
FIG. 2 illustrates a conventional cell assembly including a prismatic cell.
FIG. 3 illustrates a conventional battery pack and a cell assembly accommodated therein.
FIG. 4 illustrates a conventional cell assembly.
FIG. 5 illustrates a battery pack according to a first embodiment of the present disclosure.
FIG. 6 illustrates a cell assembly of the present disclosure.
FIG. 7 illustrates a protective sheet removed from the cell assembly of FIG. 6.
FIG. 8 is a bottom perspective view of the upper case.
FIG. 9 illustrates the upper case with hidden lines to show the protruding part from the battery pack in FIG. 5.
FIG. 10 illustrates a state in which the upper case and pack case of FIG. 9 are coupled together.
FIG. 11 is a simplified cross-sectional view of a battery pack with one of the cell assemblies seated.
FIG. 12 illustrates the migration of gases in the battery pack of FIG. 11, during a thermal runaway in the cell stack.
FIG. 13 illustrates a battery pack according to a second embodiment of the present disclosure.
FIG. 14 illustrates a cell assembly accommodated in FIG. 13.
FIG. 15 illustrates a protective sheet removed from the cell assembly of FIG. 14.
FIG. 16 illustrates a battery pack according to a third embodiment of the present disclosure.
FIG. 17 illustrates a battery pack according to a fourth embodiment of the present disclosure.

### [Best Mode for Carrying out the Invention]

Hereinafter, preferred embodiments of the present disclosure will be described in detail with reference to the accompanying drawings. Prior to this, it should be noted that the terms or words used in this specification and the claims are not to be construed in their ordinary or dictionary sense, but rather in a sense and concept consistent with the technical idea of the invention, based on the principle that the inventor may properly define the concept of a term to best describe his/her invention.

Accordingly, it is to be understood that the embodiments described herein and the configurations illustrated in the drawings are only the most preferred embodiments of the disclosure and are not intended to be exhaustive of the technical ideas of the invention, and that there may be various equivalents and modifications that may be substituted for them at the time of filing.

Furthermore, in describing the invention, specific descriptions of related known configurations or features are omitted where it is determined that such detailed descriptions would obscure the essence of the invention.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

The present disclosure relates to a battery pack accommodating a plurality of cell assemblies, characterized in that it has a protruding part with a structure pressing against an upper part of the accommodated cell assemblies.

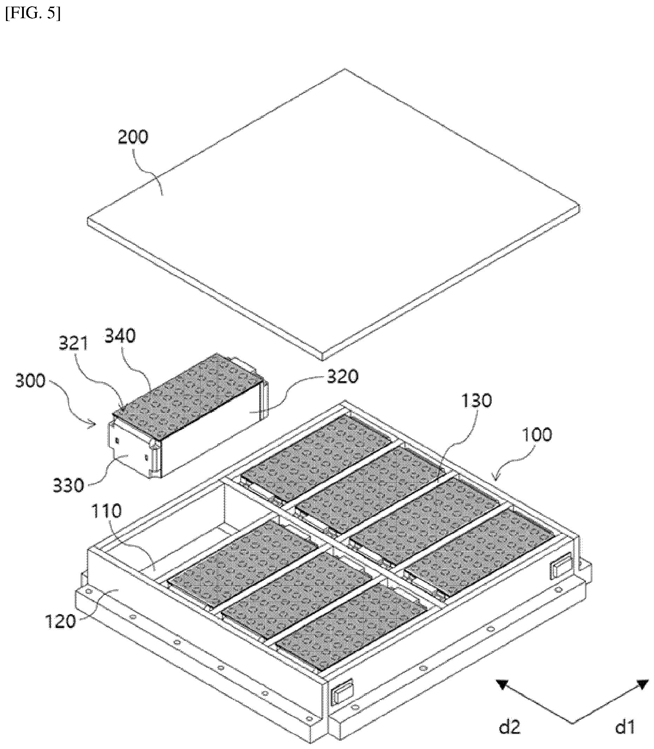

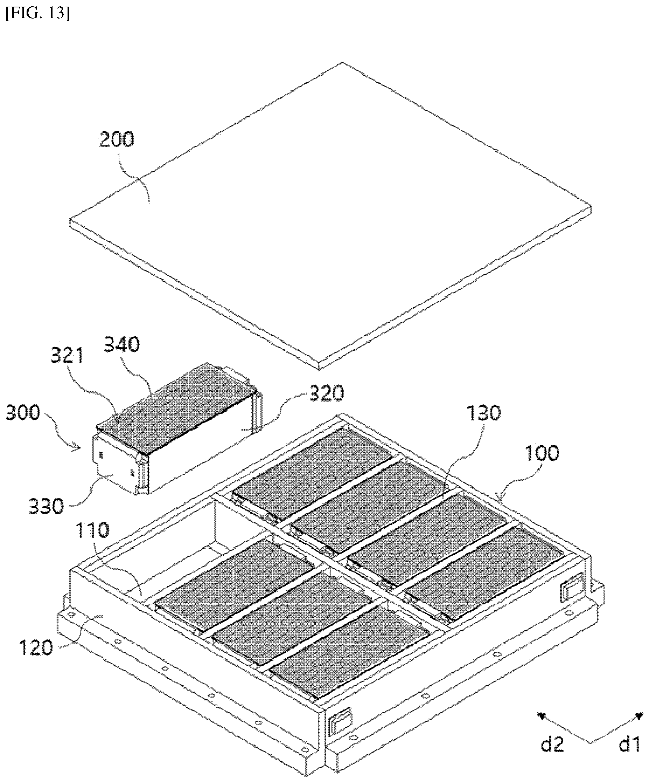

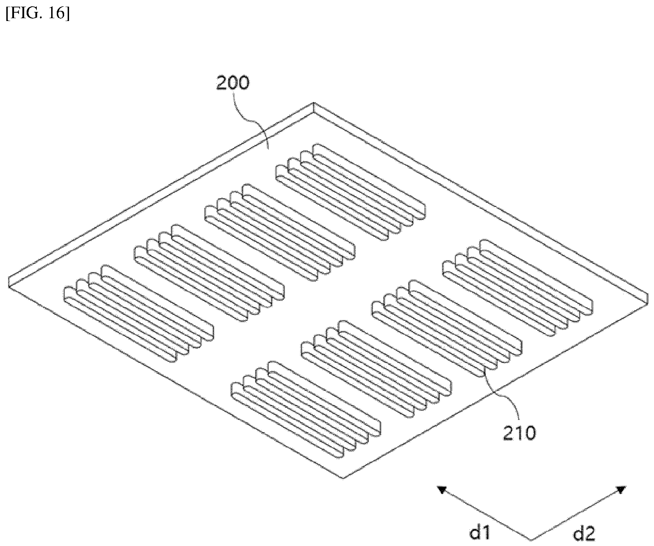

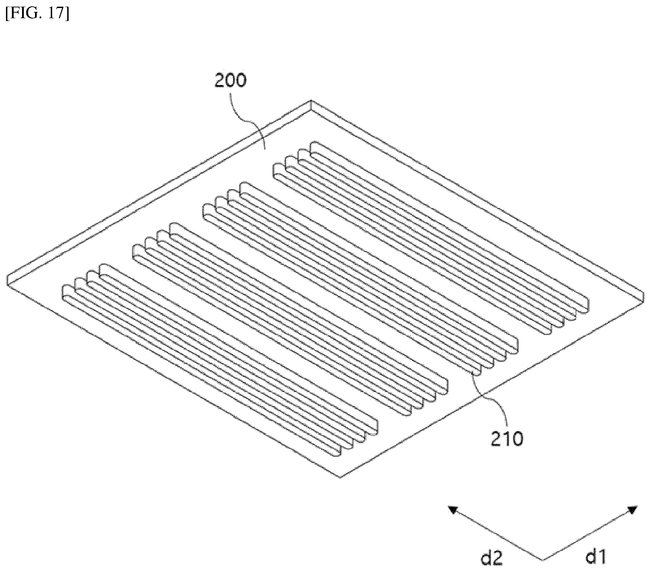

FIGS. 5 through 12 relate to a battery pack according to a first embodiment of the present disclosure, FIGS. 13 through 15 relate to a battery pack according to a second embodiment of the present disclosure, FIG. 16 relates to a battery pack according to a third embodiment of the present disclosure, and FIG. 17 relates to a battery pack according to a fourth embodiment of the present disclosure.

Hereinafter, specific embodiments of the battery pack of the present disclosure will be described in detail with reference to the accompanying drawings. For reference, relative positioning designations such as front and back or up and down as used in the following description are intended to aid in understanding the disclosure and refer to the orientation shown in the drawings unless otherwise defined.

Furthermore, the cell assembly of the present disclosure may be in the form in which a pouch-type cell is stored, as shown in FIG. 1, or in the form in which a prismatic cell is stored, as shown in FIG. 2, but for convenience, the description shall focus on the form in which the pouch-type cell of FIG. 1 is stored.

### (First embodiment)

FIG. 5 illustrates a battery pack according to a first embodiment of the present disclosure.

The battery pack includes a pack case 100 in which a cell assembly 300 is seated, and an upper case 200 coupled to the pack case 100 to cover an upper part of the cell assembly 300 seated within the pack case 100.

A cell assembly 300 accommodated in a battery pack of the present disclosure is characterized by having an opening hole 321 formed on one side, and a protective sheet 340 covering the opening hole 321.

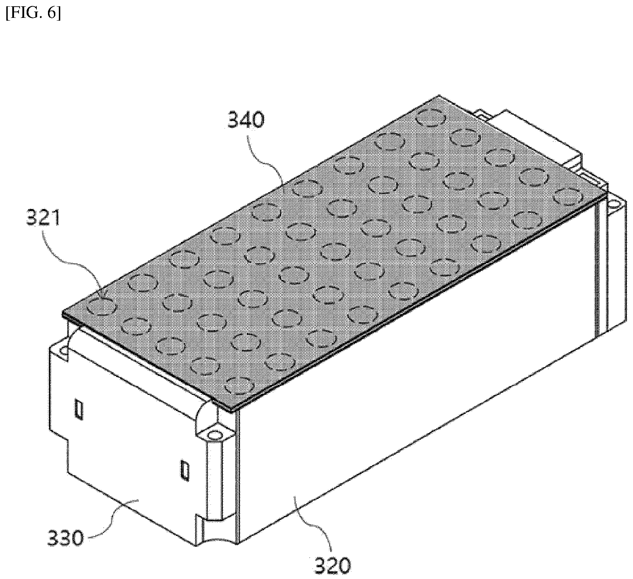

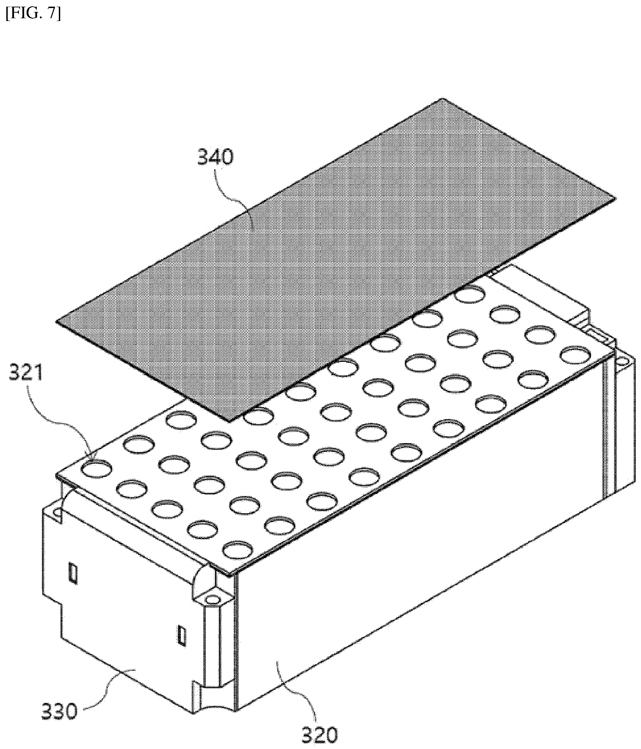

FIG. 6 illustrates a cell assembly 300 of the present disclosure, and FIG. 7 illustrates a protective sheet 340 removed from the cell assembly 300 of FIG. 6.

The cell assembly 300 includes a cell stack 310 including a plurality of cells and a module frame 320 enclosing at least one side of the cell stack 310.

The cell assembly 300 may further include an end plate 330, as shown in FIG. 6, which protects the cell stack 310 accommodated therein from external impacts and the like, and which has external terminals electrically connected to the cell stack 310.

The module frame 320 includes a plurality of opening holes 321 that are open to expose the cell stack 310 inside to the outside, as shown in FIG. 7.

The opening holes 321 are formed for the purpose of preventing the cell assembly 300 from exploding as the pressure of the gas (g) inside the cell assembly 300 increases when high temperature gas (g) is generated due to thermal runaway of the stored cell stack 310. In other words, the opening holes 321 serve as a passageway for the gas (g) generated by the thermal runaway of the cell stack 310 to escape to the outside.

The opening hole 321 is formed on the module frame 320, which is positioned at the upper part relative to the cell assembly 300 of FIG. 7.

The opening hole 321 may be formed in any one of a circular and polygonal shape.

The cell assembly 300 of the present disclosure further includes a protective sheet 340 that is attached to the surface of the module frame 320 to cover the opening hole 321.

The protective sheet 340 covers one side of the module frame 320 in which the opening holes 321 are formed to regulate the escape of flames and spark particles and the like through the opening holes 321. Furthermore, in the event of a thermal runaway of any of the cell assemblies 300 accommodated, the protective sheet 340 served to regulate the flames and gases from entering the opening holes 321 of other normal cell assemblies 300.

The protective sheet 340 preferably includes a material that is heat resistant and flame resistant so as not to be damaged by the high temperature gas (g) and not to be burnt by flames.

Further, the protective sheet 340 preferably includes a material having electrical insulating properties.

The protective sheet 340 may be a non-porous structure that does not allow gas to pass through, or it may be a porous structure that includes a plurality of pores that selectively allow gas to pass through.

The protective sheet 340 having a non-porous structure is attached to seal the opening hole of the cell assembly. Therefore, in the case of the cell assembly 300 to which the protective sheet 340 is normally attached, it is difficult for gases, flames, etc. to pass through the opening hole 321.

The protective sheet 340 has a limit pressure under which it is not deformed by external pressure, and may be damaged when pressure exceeding the limit pressure is applied. For example, as described above, the protective sheet 340 sealing the opening holes 321 may partially rupture to release gas and flame when the pressure inside the cell assembly 300 reaches the limit pressure range. In this case, the protective sheet 340 may have fracture lines applied to it to intentionally open the intended area first.

The porous protective sheet 340 allows the gas (g) generated by the thermal runaway of the cell to pass through, but does not allow spark particles that may be generated with the gas (g) to pass through.

The pack case 100 includes a base plate 110 supporting a lower part of the cell assembly 300, and side beams 120 coupled to a rim of the base plate 110 to support side parts of the cell assembly 300.

Further, the pack case 100 may include a cross beam 130 having a lower end coupled to the base plate 110 to compartmentalize an interior space.

The plurality of cell assemblies 300 may be disposed and seated apart from each other in the interior space of the pack case 100 compartmentalized by the cross beams 130 and the like. In this case, each cell assembly 300 is disposed so that the opening holes 321 and the protective sheet 340 are the upper surface, as shown in FIG. 5.

The upper case 200 is coupled to the upper end of the side beams 120 of the pack case 100 such that the upper part of the cell assembly 300 seated inside the pack case 100 is covered, as shown in FIG. 5.

The protective sheet 340 may be attached to the surface of the module frame 320 by an adhesive or glue or the like. However, when the pressure of the gas (g) is very large and exceeds the attachment force, it may fall off from the module frame 320. In other words, the protective sheet 340 may peel off from the surface of the module frame 320 when the pressure of the gas (g) is large, and may not play a role in filtering spark particles and flames, etc.

The battery pack of the present disclosure is characterized by the addition of a structure capable of pressing the protective sheet 340 towards the module frame 320 to prevent the protective sheet 340 from being removed from the surface of the module frame 320, as described above.

Specifically, the upper case 200 includes a protruding part 210 at its lower end that presses against the upper part of a cell assembly 300 seated in the pack case 100.

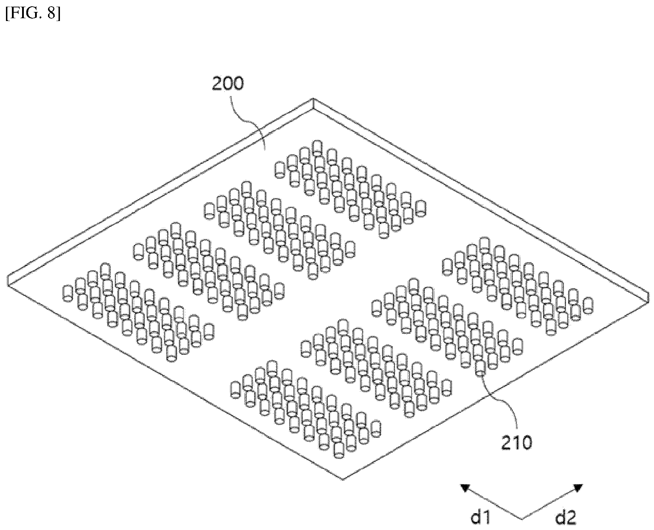

FIG. 8 is a bottom perspective view of the upper case 200.

Referring to FIG. 8, a plurality of protruding parts 210 is formed at the lower end of the upper case 200.

Each of the protruding parts 210 is in the form of a column with a flat end, and protrudes a predetermined length from the surface of the upper case 200.

In addition to the shapes shown above, the protruding part 210 may also be in the form of downwardly convex projections. That is, the protruding part 210 may be of any shape that can fully press against the upper part of the cell assembly 300.

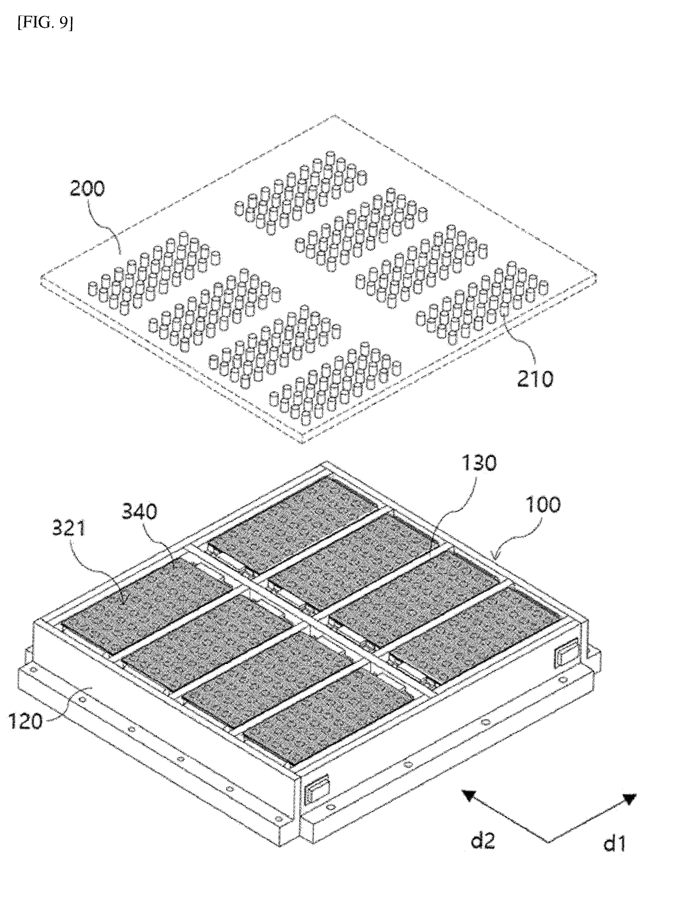

FIG. 9 illustrates the upper case 200 with hidden lines so that the protruding part 210 from the battery pack of FIG. 5 is visible.

The protruding part 210 is formed at a location corresponding to each of the cell assemblies 300.

Preferably, the protruding part 210 extends sufficiently to press against the upper part of each cell assembly 300 when the upper case 200 is fully coupled to the pack case 100. Thus, a protective sheet 340 attached to the module frame 320 of the cell assembly 300 can be pressed against the lower end of the protruding part 210 and remain attached.

However, the opening hole 321 of the cell assembly 300 should not be completely blocked by the protruding part 210. If the protruding part 210 blocks the opening holes 321, the gases (g) inside the cell assembly 300 may not be able to escape smoothly in the event of a thermal runaway of the cell, which may result in an explosion.

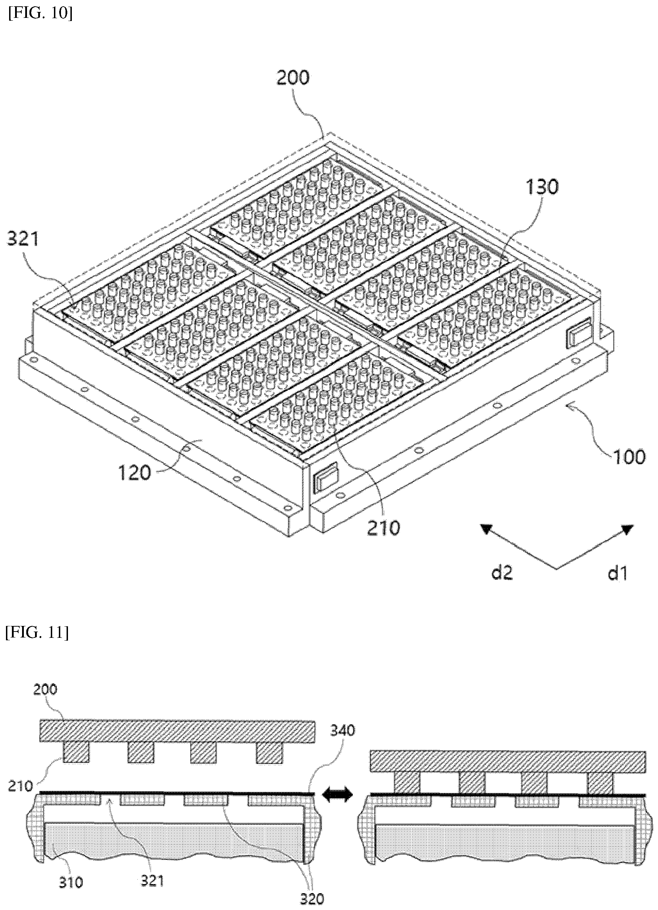

FIG. 10 illustrates a state in which the upper case 200 and pack case 100 of FIG. 9 are coupled together.

The protruding part 210 is formed at the lower end of the upper case 200 to correspond to a position where the opening hole 321 of the cell assembly 300 is not provided, as shown in FIG. 10.

FIG. 11 is a simplified cross-sectional view of a battery pack in which one of the cell assemblies 300 is seated.

Referring to FIG. 11, each of the protruding parts 210 formed at the lower end of the upper case 200 presses against the module frame 320 where the opening holes 321 are not located in the cell assembly 300.

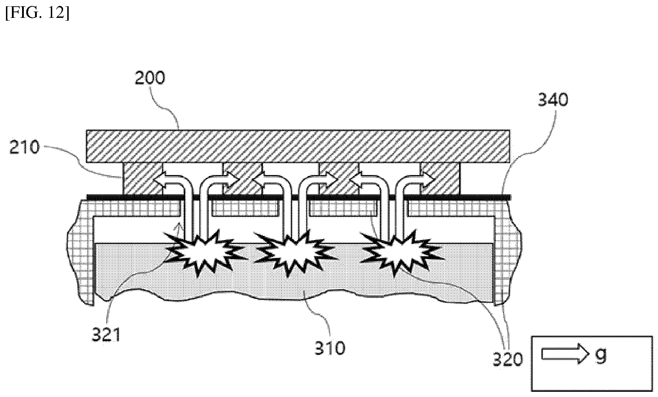

FIG. 12 illustrates the migration of gas (g) in the battery pack of FIG. 11, when the cell stack 310 is in thermal runaway.

Referring to FIG. 12, the gas (g) rising upward from the cell stack 310 passes through the opening hole 321 and the protective sheet 340 and travels between the upper case 200 and the cell assembly 300. That is, the gas (g) can travel between the plurality of protruding parts 210 interposed between the upper case 200 and the cell assembly 300 and then be discharged to the outside.

The battery pack of the present disclosure further includes a discharge hole (not shown) formed to communicate with the internal space to allow the gas (g) generated inside to be discharged to the outside.

Thus, the battery pack of the present disclosure may allow the high temperature gas (g) discharged through the opening hole 321 of the cell assembly 300 to be discharged to the outside through the discharge hole.

The discharge hole may be formed on one side of the side beam 120 of the pack case 100, or may be formed on one side of the upper case 200.

### (Second embodiment)

The shape of the opening holes 321 of the cell assembly 300 accommodated in the battery pack of the present disclosure may be slit-shaped. That is, the opening holes 321 may be elongated in one direction.

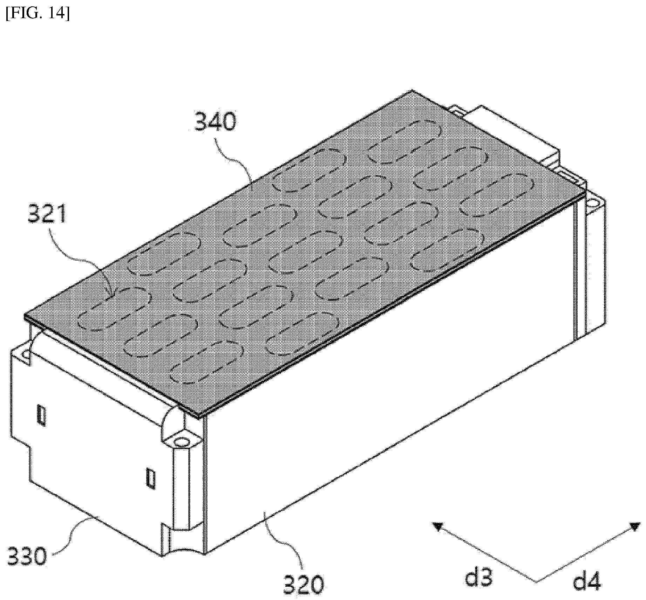

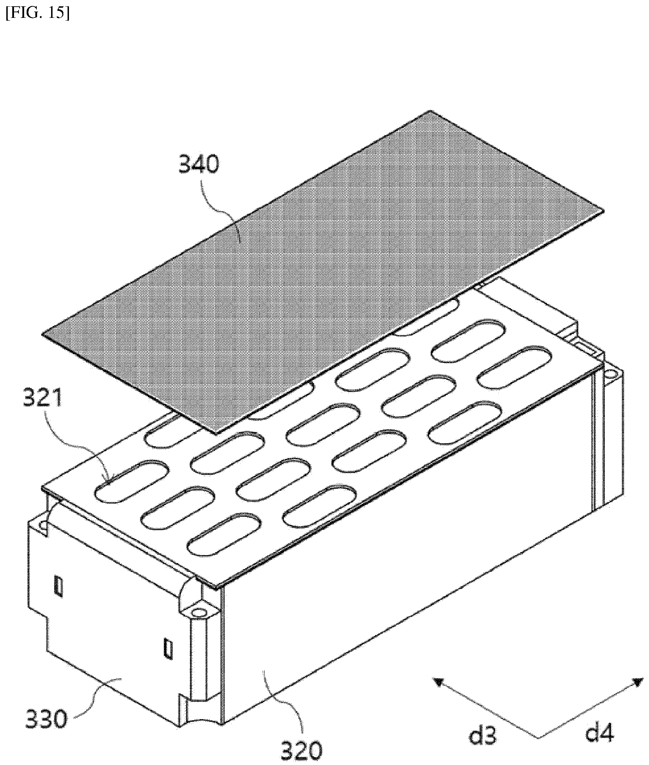

FIG. 13 illustrates a battery pack according to a second embodiment of the present disclosure, FIG. 14 illustrates a cell assembly 300 accommodated in FIG. 13, and FIG. 15 illustrates a protective sheet 340 removed from the cell assembly 300 of FIG. 14.

Referring to FIGS. 13 through 15, the opening hole 321 is formed extending along the longitudinal direction d4 of the cell assembly 300.

The opening hole 321 may have a shape extending along the width direction d3 of the cell assembly 300 in addition to the shape shown.

### (Third embodiment)

The protruding part 210 included in the battery pack of the present disclosure may be elongated in either direction.

FIG. 16 illustrates an upper case 200 included in a battery pack according to a third embodiment of the present disclosure.

Referring to FIG. 16, the protruding parts 210 are formed elongating along the width direction d1 of the battery pack. Although not shown, the opening hole 321 of the cell assembly 300 is preferably also formed in a shape corresponding to the shape of the protruding part 210.

### (Fourth embodiment)

The protruding part 210 included in the battery pack of the present disclosure may be elongated in either direction.

FIG. 17 illustrates an upper case 200 included in a battery pack according to a fourth embodiment of the present disclosure.

Referring to FIG. 17, the protruding parts 210 are formed extending along the longitudinal direction d2 of the battery pack. Although not shown, the opening hole 321 of the cell assembly 300 is preferably also formed in a shape corresponding to the shape of the protruding part 210.

The present disclosure has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may be substituted for them at the time of filing the present application.

### [Description of Reference Numerals]

10: (PRIOR ART) PACK CASE
20: (PRIOR ART) CELL ASSEMBLY
21: (PRIOR ART) END PLATE
22: (PRIOR ART) MODULE FRAME
23: (PRIOR ART) OPENING HOLE
24: (PRIOR ART) CELL
25: (PRIOR ART) CELL STACK
26: (PRIOR ART) ELECTRODE LEAD
100: PACK CASE
110: BASE PLATE
120: SIDE BEAM
130: CROSS BEAM
200: UPPER CASE
210: PROTRUDING PART
300: CELL ASSEMBLY
310: CELL STACK
320: MODULE FRAME
321: OPENING HOLE
330: END PLATE
340: PROTECTIVE SHEET
g: GAS
d1: BATTERY PACK WIDTH DIRECTION
d2: BATTERY PACK LONGITUDINAL DIRECTION
d3: CELL ASSEMBLY WIDTH DIRECTION
d4: CELL ASSEMBLY LONGITUDINAL DIRECTION

## Claims

1. A battery pack in which a cell assembly is accommodated, comprising:
a pack case in which a cell assembly is seated; and
an upper case coupled to the pack case to cover an upper part of a cell assembly seated inside the pack case, wherein
the upper case includes a protruding part at a lower end that presses against the upper part of a cell assembly seated in the pack case.

2. The battery pack of claim 1, wherein
the cell assembly comprises:
a cell stack including a plurality of cells; and
a module frame enclosing at least one side of the cell stack.

3. The battery pack of claim 2, wherein
the module frame includes an opening hole open to expose a cell stack therein to the outside.

4. The battery pack of claim 3, wherein
the opening holes are formed in any one of a circular and a polygonal shape.

5. The battery pack of claim 3, wherein
the opening holes extend along at least one of a longitudinal direction and a width direction of the cell assembly.

6. The battery pack of claim 3, wherein
the cell assembly further comprises:
a protective sheet that attaches to a surface of the module frame to cover the opening hole.

7. The battery pack of claim 6, wherein
the protruding part of the upper case is formed in a position where the opening holes of the cell assembly is not provided.

8. The battery pack of claim 6, wherein
the opening holes are formed on a module frame located on the upper part of the cell assembly.

9. The battery pack of claim 6, wherein
the protective sheet is a porous structure comprising a plurality of pores that selectively allow gas to pass through.

10. The battery pack of claim 6, wherein
the protective sheet is a structure that is not formed with pores to prevent the passage of gases.

11. The battery pack of claim 6, wherein
the protective sheet has electrical insulating properties.

12. The battery pack of claim 6, wherein
the protective sheet has heat and flame resistance.

13. The battery pack of claim 1, wherein
the protruding part is in the form of a column with a flat end.

14. The battery pack of claim 1, wherein
the protruding part is in the form of a downward convex projection.

15. The battery pack of claim 1, wherein
the protruding part extends along at least one of a longitudinal direction and a width direction of the upper case.
